# EUROPEAN PATENT APPLICATION

(11) **EP 2 357 445 A1**
(43) Date of publication of application: **17.08.2011**
(21) Application number: 08878708.0
(22) Date of filing: 08.12.2008
(51) Int. Cl.: G01C 21/00, G08G 1/137

(54) **INFORMATION PROVIDING SYSTEM, INFORMATION DISTRIBUTION SERVER, AND INFORMATION PROVIDING METHOD**

(71) Applicant: Navitime Japan Co., Ltd., Tokyo 107-0062 (JP)
(72) Inventor: NAKAMURA, Mitsunobu, Tokyo 107-0062 (JP)
(74) Representative: HOFFMANN EITLE
(86) International application number: PCT/JP2008/072263
(87) International publication number: WO 2010/067409

(57) **Abstract**

An information providing system stores street information obtained by associating a house number located at the boundary of a map area with each street included in the map area with respect to each segmented map area constituted of predetermined unit areas, receives a location identification signal to acquire spot information including the present location, judges a map area corresponding to the present location out of the map areas on the basis of the acquired spot information, acquires street information included in the judged map area, judges a street which is the nearest from the present position on the basis of the acquired street information and the spot information, refers to house number information associated with the street information, and judges the house number at the present locations as location identification information on the basis of the street information corresponding to the nearest street and the spot information. This enables the information providing system to display the location identification information (address) by use of the map data.

## Description

### TECHNICAL FIELD

The present invention relates to an information-providing system for providing predetermined map information to a user who moves on the basis of the map information stored in a map database, and particularly relates to an information-providing system, an information distribution server, and an information-providing method configured so as to display addresses with good efficiency on the basis of street information contained in map information in mesh units.

### BACKGROUND ART

In recent years, there have been developed map display services for carrying out a map search in accordance with a desired address, facility name, or other search conditions, and in accordance with present location information acquired from a GPS signal by a GPS receiving function provided to a mobile terminal device; and displaying the map information obtained by the map search together with the present location on the display screen of the mobile terminal device.

In a navigation service, a path search is carried out in accordance with search conditions that include a user's desired departure point and destination, and time information for the departure and arrival, a recommended path obtained by the path search is displayed, and predetermined guidance information is provided to a user moving in accordance with the recommended path via the user's terminal device by characters, audio, or the like.

In the display of map information and the notification of guidance information, it is common to use a residential display configured in accordance with an address-naming method using a city-block scheme or a road scheme. Here, the city-block scheme is a scheme in which addresses are configured based on a set scheme in an area partitioned by roads or the like; and the road scheme is a scheme in which addresses are assigned along named roads.

Based on such background art, Patent Document 1 (Japanese Laid-open Patent Application No. 2007-163310) discloses, as an "Information Display Device, Information Display Method, Information Display Program, and Recording Medium," a technique for providing guidance for a series of addresses along a street in areas with addresses assigned in accordance with a road-scheme address-naming method, even when a destination point has not been set.

In Patent Document 1, a technique is described in which the road on which a vehicle is traveling is determined from GPS or other location information, the nearest address is determined from the location information and the road thus determined, and the information related to the name of the road thus determined and the nearest address is displayed. The driver of the vehicle can thereby drive safely and without concern in areas in which addresses are assigned in accordance with a road-scheme address-naming method.

### [Patent Reference 1]

Japanese Laid-open Patent Application No. 2007-163310 (paragraphs [0041] to [0046], and FIG. 2)

### DISCLOSURE OF THE INVENTION

### [Problems the Invention Is Intended To Solve]

When an address at an arbitrary spot is to be displayed, there is a known method in the prior art in which the latitude and longitude and individual addresses are associated with each other and stored in advance, and arbitrary spot information (latitude and longitude) is determined by inputting or by acquisition, whereupon the address is acquired and displayed based on the associated stored information.

However, there is a problem in that storing a large number of addresses each in association with the latitude and longitude results in a large amount of information, and a high-capacity storage device is required. Also, in the background art disclosed in Patent Document 1, storing addresses in association with all of the latitude and longitude data so that a target road can be judged requires a large amount of information. There is also a problem in that storing a large amount of information precipitates an adverse effect in causing a reduction in processing speed.

After thoroughgoing research to solve the problems described above, the inventor of the present invention perfected the present invention having found that the problems described above can be solved by controlling address display on the basis of street information included in the map information in mesh units or other predetermined unit areas.

In other words, an object of the present invention is to solve the problems described above, and to provide an information-providing system, an information distribution server, and an information-providing method that can display addresses using map data without storing the addresses associated with latitude and longitude data.

### [Means for Solving the Abovementioned Problems]

In order to overcome these drawbacks, a first aspect of the present invention is an information-providing system having an information distribution server for providing location-specifying information that corresponds to spot information, and a mobile terminal device for connecting to the information distribution server via transmission and reception means and displaying location-specifying information provided by the information distribution server, the information-providing system characterized in comprising:
a street information database populated with street information in which house numbers located at a boundary of individual map areas are associated with individual streets included in the map areas, each of which map areas being segmented into predetermined unit areas;
present location acquisition means for receiving a location-specifying signal and acquiring spot information that includes the present location;
area judgment means for judging the map area that corresponds to the present location among the map areas, on the basis of spot information acquired from the present location acquisition means;
street information acquisition means for acquiring from the street information database the street information included in the map area judged by the area judgment means;
street judgment means for judging the street nearest the present location on the basis of spot information and street information acquired by the street information acquisition means; and
house number judgment means for judging the house number of the current site as the location-specifying information on the basis of the spot information and the street information that corresponds to the nearest street, with reference to the house number information associated with the street information stored in the street information database.

The information-providing system according to a second aspect is the information-providing system according to the first aspect, characterized in that the street judgment means compares the vertical distance dropped down from the present location acquired by the present location acquisition means with each street that corresponds to the street information acquired by the street information acquisition means, and judges the street having the shortest vertical distance to be the nearest street.

The information-providing system according to a third aspect is the information-providing system according to the first or second aspect, characterized in further comprising path search means for searching for a path from a departure point to a destination on the basis of path search conditions, wherein
the guidance path searched by the path search means is displayed and the location-specifying information is displayed.

The present invention according to a fourth aspect is an information distribution server for providing to a mobile terminal device connected via transmission and receiving means location-specifying information that corresponds to spot information acquired by the mobile terminal device, the information distribution server comprising:
a street information database including street information in which house numbers located at a boundary of a map area are associated with individual streets included in the map area, each of which map areas being segmented into predetermined unit areas;
area judgment means for judging the map area that corresponds to the present location among the map areas on the basis of spot information acquired by the mobile terminal device;
street information acquisition means for acquiring from the street information database the street information included in the map area judged by the area judgment means;
street judgment means for judging the street nearest the present location on the basis of spot information and street information acquired by the street information acquisition means; and
house number judgment means for judging the house number of the current site as the location-specifying information on the basis of the spot information and the street information that corresponds to the nearest street with reference to the house number information associated with the street information stored in the street information database.

The information distribution server according to a fifth aspect is the information-providing system according to the fourth aspect, characterized in that the street judgment means compares the vertical distance dropped down from the present location acquired by the mobile terminal device with each street that corresponds to the street information acquired by the street information acquisition means, and judges the street having the shortest vertical distance to be the nearest street.

The information distribution server according to a sixth aspect is the information-providing system according to the fourth or fifth aspect, characterized in further comprising path search means for searching for a path from a departure point to a destination on the basis of path search conditions, wherein
the guidance path searched by the path search means is provided and the location-specifying information is provided.

The present invention according to a third aspect is an information-providing method in an information distribution server for providing, to a mobile terminal device connected via transmission and receiving means, location-specifying information that corresponds to spot information acquired by the mobile terminal device, the information-providing method comprising:
having a street information database populated with street information in which house numbers located at a boundary of individual map areas are associated with individual streets included in the map areas, each of which map areas being segmented into predetermined unit areas;
a first step for judging the map area that corresponds to the present location among the map areas, on the basis of spot information acquired by the mobile terminal device;
a second step for acquiring from the street information database the street information included in the map area judged in the first step;
a third step for judging the street nearest the present location on the basis of spot information and street information acquired in the second step; and
a fourth step for judging the house number of the current site as the location-specifying information on the basis of the spot information and the street information that corresponds to the nearest street, with reference to the house number information associated with the street information stored in the street information database.

The information distribution method according to an eighth aspect is the information-providing method according to the seventh aspect, characterized in comprising the third step comparing the vertical distance dropped down from the present location acquired by the mobile terminal device with each of the streets that corresponds to the street information acquired in the second step, and judges the street having the shortest vertical distance to be the nearest street.

### [Effect of the Invention]

The invention according to a first aspect is an information-providing system having an information distribution server for providing location-specifying information that corresponds to spot information, and a mobile terminal device for connecting to the information distribution server via transmission and reception means and displaying location-specifying information provided by the information distribution server, the information-providing system characterized in comprising a street information database containing street information in which house numbers located at a boundary of a map area are associated with each street included in the map area, each map area being segmented into predetermined unit areas; present location acquisition means for receiving a location-specifying signal and acquiring spot information that includes the present location; area judgment means for judging the map area that corresponds to the present location among the map areas on the basis of spot information acquired from the present location acquisition means; street information acquisition means for acquiring from the street information database the street information included in the map area judged by the area judgment means acquired; street judgment means for judging the street nearest the present location on the basis of spot information and street information acquired by the street information acquisition means; and house number judgment means for judging the house number of the current site as the location-specifying information on the basis of the spot information and the street information that corresponds to the nearest street with reference to the house number information associated with the street information stored in the street information database.

Therefore, the information-providing system specifies a map area from spot information, judges the street information included in the map area, and performs a control so as to derive a house number from the street information, whereby the spot information (latitude and longitude) associated with each address is not required to be stored and the amount of information can be dramatically reduced. Identification numbers that correspond to indexed map areas are associated with the street information. Therefore, processing speed can be increased because the street information that corresponds to the map area associated with the spot information is specified by a perfect match with the identification number.

The information-providing system according to the second aspect is the information-providing system according to the first aspect, configured so that the street judgment means compares the vertical distance dropped down from the present location acquired by the present location acquisition means with each street that corresponds to the street information acquired by the street information acquisition means, and judges the street having the shortest vertical distance to be the nearest street.

Therefore, the information-providing system can increase processing speed because the street nearest to the present location is specified from among the streets that correspond to the street information, on the basis of the street information that corresponds to the map area relevant to the spot information.

The information-providing system according to the third aspect is the information-providing system according to the first or second aspect, further comprising path search means for searching for a path from a departure point to a destination on the basis of path search conditions, wherein
the guidance path searched by the path search means is displayed and the location-specifying information is displayed.

Therefore, the information-providing system displays a guidance path as the path search results, specifies a map area from the spot information, judges street information included in the map area, and performs a control so as to derive a house number from the street information, whereby the spot information (latitude and longitude) associated with each address is not required to be stored and the amount of information can be dramatically reduced. Also, identification numbers that correspond to indexed map areas are associated with the street information. Therefore, processing speed can be increased because the street information that corresponds to the map area corresponding to the spot information is specified by a perfect match with the identification number.

In the invention according to the fourth to sixth aspects, an information distribution server composed of the information-providing system of the first to third aspects can be provided.

In the invention according to the seventh or eighth aspects, an information-providing method in the information distribution server according to the fourth to sixth aspect can be provided.

### BRIEF DESCRIPTION OF THE DRAWINGS

FIG. 1 is a system configuration diagram showing the configuration of the information-providing system according to an example of the present invention;
FIG. 2 is a diagram schematically showing map data partitioned by a mesh in an example of the present invention;
FIG. 3 is an enlarged diagram of map mesh M06 in FIG. 2;
FIG. 4 is a diagram showing house numbers assigned to a street S1 in FIG. 3;
FIG. 5 is a flowchart showing the processing procedure in the information distribution server according to an example of the present invention; and
FIG. 6 is a diagram showing the configuration of the street information database according to the present invention.

### [Key to Symbols]

- 1: information-providing system
- 2: network
- 10: information distribution server
- 101: control means
- 102: transceiving means
- 103: mesh judgment means
- 104: street information acquisition means
- 105: street judgment means
- 106: house number judgment means
- 107: map database
- 108: network database for path search
- 109: path search means
- 110: path guiding means
- 20: mobile terminal device
- 21: control means
- 22: transmission and reception means
- 23: present location acquisition means
- 24: display means
- 25: input means

### BEST MODE FOR CARRYING OUT THE INVENTION

Specific examples of the present invention are described in detail below with reference to the drawings. However, the examples described below illustrate a navigation system for implementing the technical concepts of the present invention and are not intended to limit the present invention to this navigation system. Application can also be made equally to an information-providing system of other embodiments included in the claims.

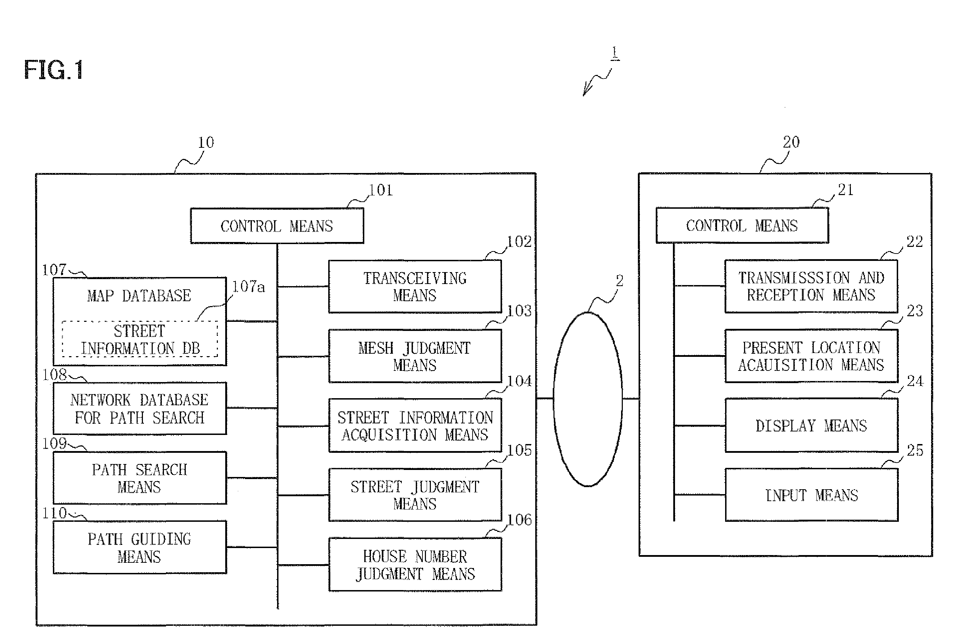

FIG. 1 is a system configuration view showing the configuration of the information-providing system according to an example of the present invention. The information-providing system 1 according to an example of the present invention constitutes a communication-type navigation system in which an information distribution server 10 for providing a variety of information and a mobile terminal device 20 are connected via the Internet or another network.

The information distribution server 10 is composed of control means 101, transmission and reception means 102, mesh judgment means 103, street information acquisition means 104, street judgment means 105, house number judgment means 106, a map database 107, a network database 108 for path search, path search means 109, and path guiding means 110, as shown in FIG. 1.

The control means 101 is a microprocessor having a RAM, ROM, and processor (not shown), and controls the operation of each part using a control program stored in the ROM. The transmission and reception means 102 is a communication interface for transmitting and receiving communication data to and from the mobile terminal device 20 or the like via a network 2. Various requests and present location information are received from the mobile terminal device 20, and various data are alternatively distributed to the mobile terminal device 20.

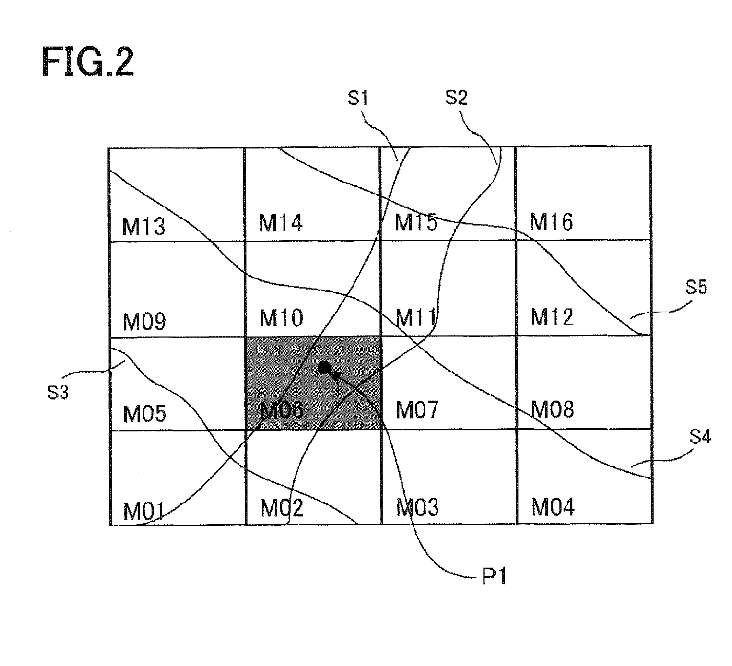

The mesh judgment means 103 judges the map mesh of the map data from the spot information (latitude and longitude) that indicates the present location received from the mobile terminal device 20. As used herein, the term map mesh is a map area composed of mesh-shaped unit areas partitioned into predetermined sizes by latitude and longitude. FIG. 2 is a diagram schematically showing map data partitioned by a mesh in the example of the present invention. The map data of a region that includes the present location (e.g., P1) of the mobile terminal device 20 is partitioned into 16 meshes M01 to M16, as shown in FIG. 2. Also, S1 to S5 represent streets on a map.

When spot information of the spot P1 in FIG. 2 is received from the mobile terminal device 20, the mesh judgment means 103 judges that the map mesh relevant to the spot information is M06 on the basis of the location information of the boundary line between adjacent map meshes and the spot information of four apex points addressed in the map mesh data. The mesh judgment means 103 corresponds to area judgment means described in the claims.

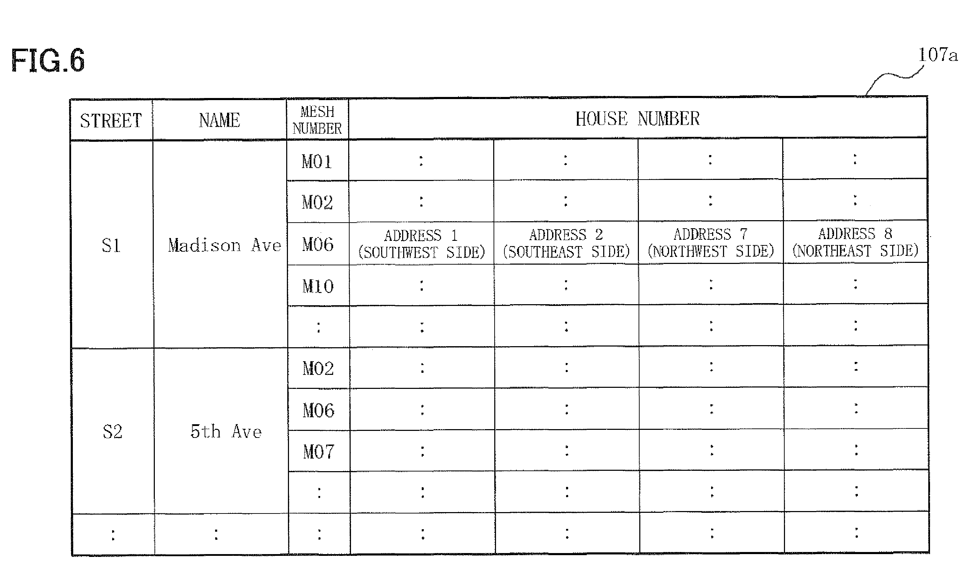

The street information acquisition means 104 acquires street information included in each map mesh. The street information is contained in storage means in advance as, e.g., a street information database 107a, as shown in FIG. 6. FIG. 6 is a diagram showing the configuration of the street information database according to the example of the present invention.

The street information database 107a is stored, e.g., in the map database 107 of the information distribution server 10, as described below, and the streets are formed into data by associating the intersected map meshes and the house numbers located on the boundary between the intersected map meshes.

For example, in FIG. 6, the street S1 has the street name "Madison Ave;" the identification numbers (mesh numbers) that correspond to the map meshes through which the street S1 passes are M01, M02, M06, M10, and so forth; and the house numbers at the boundary locations at the two ends of the map mesh M06 are 1 and 2, and 7 and 8.

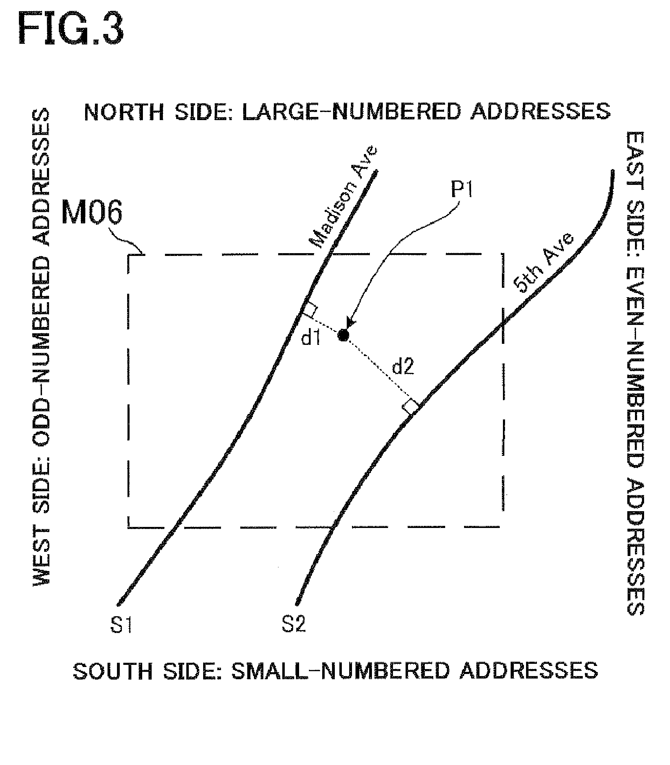

The street information acquisition means 104 acquires the street information included in the map mesh M06, which corresponds to the spot P1 in FIG. 2. FIG. 3 is an enlarged diagram of map mesh M06 in FIG. 2

The street information included in the map mesh M06 is the street 81 and street S2, as shown in FIG. 3. Therefore, the street information acquisition means 104 refers to the street information database 107a shown in FIG. 6 and acquires the street S1 and street S2 as street information that corresponds to the map mesh M06.

The street judgment means 105 judges the nearest street from the spot information of the specific spot P1 (present location) and the acquired street information. Specifically, in FIG. 3, the distances from the spot P1 to the street S1 and to the street S2 included in the map mesh M06 are compared, and the street closest in distance from the spot P1 is judged to be the nearest street.

Here, when a vertical line is dropped from the spot P1 to the streets S1 and S2, d2 > d1, where d1 is the distance from the spot P1 to the street S1, and d2 is the distance from the spot P1 to the street S2. Therefore, the street judgment means 105 can judge that the street nearest to the spot P1 is the street S1.

The distance from a specific spot to the relevant street can be obtained by computing the location information of a specific spot using shape data of the streets. The shape data of the street may be stored in the street information database 107a associated with the street information in advance, and computation may be carried out using the node data associated with the streets.

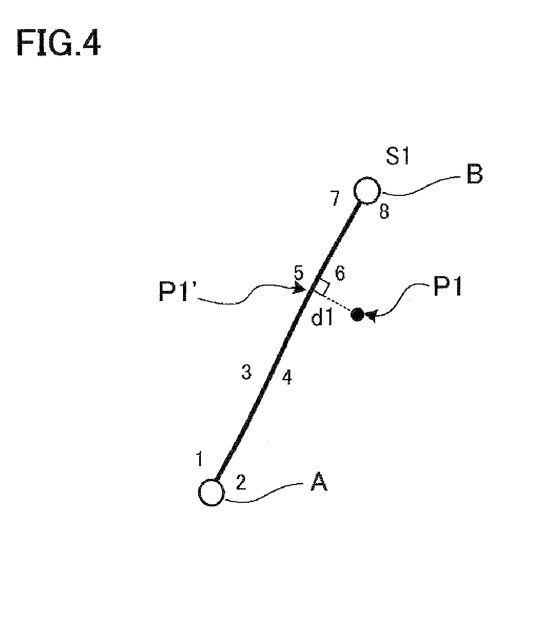

The house number judgment means 106 refers to the house number associated with the street information and judges the house number at the specific spot P1 (present location). FIG. 4 is a diagram showing house numbers assigned to the street S1 in FIG. 3. The house numbers 1, 2, and 7, 8 are assigned to the two ends A, B that correspond to the mesh boundary location of the street S1 that passes through the map mesh M06, as shown in FIG. 4.

For this reason, the street information database 107a associates and stores the house numbers 1, 2, and 7, 8 in the boundary location of the map mesh M06 as street information of the street S1, as shown in FIG. 6.

The house number judgment means 106 judges the house number in the specific spot P1 (present location) on the basis of the street information of the street S1 judged to be the nearest street. Specifically, in FIG. 4, the street S1 included in the map mesh M06 is divided into a predetermined number of equal sections, and the division point that is relevant to a spot (e.g., the intersection with the vertical line dropped down from the spot P1 to the street S1) P1' nearest to the street S1 from the spot P1 is derived.

The house number judgment means 106 refers to the street information database 107a, and deduces that the house numbers assigned to the end point A among the two ends A, B that correspond to the boundary locations with the map mesh M06 of the street S1 are 1 (southwest side) and 2 (southeast side), as shown in FIG. 4; that the house numbers assigned to the end point B are 7 (northwest side) and 8 (northeast side); and that the house numbers of the first section of the three sections on the line segment AB are therefore 3 (west side) and 4 (east side); and that the house numbers of the second section of the three sections on the line segment AB are therefore 5 (west side) and 6 (east side). The section point corresponding to the spot P1' relevant to the second section of the three sections on the line segment AB. Therefore, the house number of the spot P1 is judged to be 6 because the house numbers are 5 (west side) and 6 (east side), and the spot P1 is located on the even-numbered address side.

Here, the predetermined number of sections of the equally divided segment that corresponds to the street included in the relevant map mesh can be suitably set in accordance with the total number of address numbers assigned to the street. For example, the number of sections may be computed from the house numbers (house numbers 1,2 and 7, 8 in the case of the map mesh M06 of FIG. 4) assigned to the two ends that correspond to the mesh boundary location of the street with reference to the street information database 107a shown in FIG. 6.

When the house number judgment means 106 judges the house number at a specific spot (present location), a predetermined address-naming method for the area that includes the spot may determine the address with consideration given to the location or the like of the spot on the even-numbered address side or the odd-numbered address side from the relative positional relationship between the spot information and the street, on the basis of conditions such as large-numbered address on the north side, small-numbered address on the south side, even-numbered addresses on the east side, and odd-numbered addresses on the west side.

The location-specifying information (address) of the spot P1 (present location) is specified by the process described above by using the street name and the address number. Therefore, the information distribution server 10 transmits the location-specifying information (e.g., 6 Madison Ave.) to the mobile terminal device 20. In this manner, the latitude and longitude are not required to be associated and stored with each address because the map mesh is specified from the spot information (latitude and longitude), the street information included in the specified map mesh is judged, and the house number that corresponds to the spot information is derived from the street information. Therefore, the amount of information to be stored can be reduced. The process for specifying the location-specifying information that corresponds to the spot information can be carried out at high speed.

The map database 107 contains vector map data composed of mesh-shaped unit map areas (map meshes) data partitioned into a predetermined size by latitude and longitude. Location information of the apex points (four apex points), location information of the boundary line between the adjacent map meshes, and other information are assigned to the map mesh data, and are used for mesh judgments by the mesh judgment means 103. Also, the street information database 107a containing street information related to the streets included in the map meshes is included in the map database 107 of the present example.

When the information distribution server 10 distributes map data including the present location on the basis of the present location information (latitude and longitude) received from the mobile terminal device 20, the nine unit map areas of map data are distributed to the mobile terminal device 20 in correspondence to the eight map meshes around the periphery of the map mesh containing the present location of the mobile terminal device 20. In the case that the mobile terminal device 20 moves and map data is insufficient, the movement direction of the mobile terminal device 20 is determined and the information distribution server 10 distributes the lacking unit map data.

The information distribution server 10 distributes to the mobile terminal device 20 optimal guidance path data obtained as a result of a search by a later-described path search means 109. The guidance path data is distributed with map data added to the guidance path created as vector data. The departure point, path curve points, intersections, destination, and other guide points on the guidance path edited by a later-described path guiding means 110 are set in the guidance path data, the guidance path data includes the location coordinates (latitude and longitude) of the guide points and the guidance information (guidance information for moving straight or turning left or right) related to the guide points.

The network database 108 for path search is a database that contains road network data for searching for a movement path by walking or by automobile, and transportation network data for searching for a movement path using public transportation facilities. Specifically, the road network data is composed of link cost data, which is the node data, link data, and cost information (distance and required time) of all links formed into a database, wherein the location of the connecting points and curve points of the roads (paths) are nodes, and paths that connect the nodes are links. The transportation network data also contains link cost data in which stations are used as nodes, and links that connect stations together and timetable data (departure times, arrival times, required time) of trains and other modes of transportation as links are used as the link cost data.

The path search means 109 refers to the network database 108 for path search on the basis of a path search request from the mobile terminal device 20, and carries out a path search from a specific departure point to a destination. A technique referred to as the label determination method or the Dijkstra method is used as the path search technique.

The path guiding means 110 is used for embedding or other editing of the data of an optimal path or a plurality of recommended guidance paths searched by the path search means 109 in the map data that includes the present location read out from the map database 107, distributing the edited data to the mobile terminal device 20, and distributing various data to the mobile terminal device 20 via the transmission and reception means 102.

On the other hand, the mobile terminal device 20 is composed of control means 21, transmission and reception means 22, present location acquisition means 23, display means 24, input means 25, and the like, as shown in FIG. 1. In addition to being a cellular telephone, for example, the mobile terminal device 20 according to the examples of the present invention may be a PDA, a music player, a mobile game machine, or another mobile information terminal; or may be a mobile personal computer (PC) or another personal information terminal having a function for displaying a map.

In the mobile terminal device 20, the control means 21 is a microprocessor having a RAM, ROM, and processor (not shown), and controls the operation of each part using a control program stored in the ROM. The transmission and reception means 22 is an interface for transmitting and receiving communication data to and from the information distribution server 10 or the like via a network 2, and is configured so as to include a wireless communication unit and to carry out packet communication via the Internet and also wireless communication with a cellular telephone base station.

The present location acquisition means 23 receives signals from a GPS satellite and acquires the present location by way of satellite navigation means for positioning the present location of the mobile terminal device 20 at a latitude and longitude. The present location information (latitude and longitude) acquired by the present location acquisition means 23 is transmitted to the information distribution server 10 as described below and used for retrieving map data. The information may also be used for displaying map data and specifying the present location.

The display means 24 is composed of a liquid crystal display unit or the like, and displays maps, location-specifying information (addresses), and the like distributed from the information distribution server 10. A menu screen for operating the mobile terminal device 20 is displayed on the display means 24, and path search conditions or the like can be selected by using a pull-down menu or another operation. Therefore, the display means 24 functions as a part of the input means 25.

In the case that a map is to be displayed on the display means 24, the guidance path and a mark indicating the present location of the mobile terminal device 20 are superimposed on a map with a fixed scale and range that includes the present location of the mobile terminal device 20 acquired by the present location acquisition means 23, and the present location mark is displayed in the center of the display screen. A path matching process for correcting the present location on the guidance path is carried out in the case that the present location is offset from the guidance path due to an error in the acquired location information.

The input means 25 is used for operation and input and is composed of number keys, alphabet keys, other function keys, selection keys, scroll keys (up, down, left, right arrow keys), and the like; is used for selecting a desired menu from a menu screen displayed on the display means 24 as output means, and is alternatively used for operating keys to set path search conditions, move a cursor, or carry out various other input operations.

The mobile terminal device 20 of the present example also functions as a navigation terminal device that is carried by a pedestrian. The mobile terminal device 20 carries out wireless communication with a base station, establishes a connection relationship with the information distribution server 10 by way of a network 2 via the base station, sets the movement means (walking, automobile, or the like), the current location or a desired departure point and destination as the path search conditions, and transmits a path search request to the information distribution server 10.

The information distribution server 10 refers to the network database 108 for path search and searches for an optimal path in accordance with the path search conditions, and then edits the optimal path into guidance path data and distributes the data together with map data to the mobile terminal device 20. The information distribution server 10 distributes the requested map data to the mobile terminal device 20 in accordance with the request from the mobile terminal device 20.

The information distribution server 10 transmits location-specifying information (address) acquired by the process described above to the mobile terminal device 20 when the map data and guidance path data are distributed. The mobile terminal device 20 receives the guidance path data and the map data that includes the location-specifying information (e.g., "4 Madison Ave.") and displays the map and guidance path. In the case that audio guide data has been added to the guidance path data distributed from an information distribution server 30, predetermined guidance is displayed or audio is outputted when a guidance point has been reached.

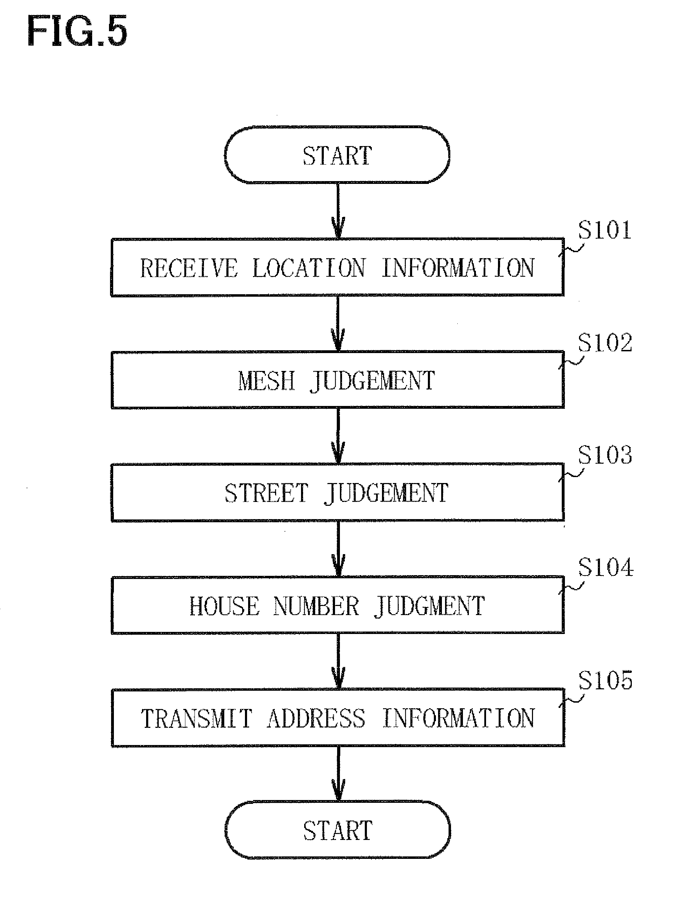

Next, the information distribution method of the information distribution server 10 according to an example of the present invention will be described with reference to the flowchart of FIG. 5. FIG. 5 is a flowchart showing the processing procedure in the information distribution server according to an example of the present invention. The processing procedure shown in FIG. 5 is implemented by the control means 101 of the information distribution server 10 by executing a control program stored in the ROM.

First, when the path search request and the present location information (spot information) included in the map data distribution request are received from the mobile terminal device 20 via the transmission and reception means 102 in the processing of step S101, the mesh judgment means 103 judges in the processing of step S102 the map mesh that is relevant to the received spot information. When the map mesh has been judged, the street information acquisition means 104 acquires the street information of the street included in the map mesh.

Next, in the processing of step S103, the street judgment means 105 judges the street nearest the present location from spot information and the acquired street information. The judgment can be made by comparing the distance between, e.g., the present location and the streets included in the relevant map mesh.

In the processing of step S104, the house number judgment means 106 refers to the house number associated with the street information of the nearest street and judges the house number in the present location. Specifically, the house number is specified at the intersection of the vertical line dropped down from the present location to the nearest street and derived on the basis of the house number of the end point that corresponds to the boundary location with the map mesh assigned to the nearest street.

In the processing of step S105, the location-specifying information (address) of the present location specified by the house number and the street name via the transmission and reception means 102 is transmitted to the mobile terminal device 20 together with the guidance path data and map data, and processing is ended.

As described above in detail, in accordance with the information-providing system of the present invention, the map area is specified from the spot information, the street information included therein is judged, and control is carried out so as to derive the house number from the street information, whereby the amount of information can be dramatically reduced because the spot information (latitude and longitude) is not required to be stored in association with each address.

Specifically, the prior art requires that the existence of a street within a predetermined distance from the location of the spot information be judged in relation to all directions (e.g., the four directions ±X, ±Y in a rectangular coordinate system) when the street information in the area of the spot information is to be specified. However, in the present invention, identification numbers (mesh numbers) that correspond to the indexed map areas (e.g., map meshes) are associated with the street information. Therefore, the processing speed for specifying street information that corresponds to the map area relevant to the spot information can be increased by a perfect match with the identification number.

In the examples described above, the map areas segmented into predetermined unit areas have the form of a mesh, but no limitation is imposed thereby, and the present invention can also be applied as long as the areas are segmented regular polygonal shapes or other predetermined units.

The information-providing system of the example described above was described as a communication-type navigation system composed of a mobile terminal device and an information distribution server, but the present invention is not limited to a communication-type information-providing system. As long as the map information and street information can be updated, it is also possible to use a configuration in which the map information and the street information are downloaded to a standalone mobile information device that has a mobile terminal device integrated with an information distribution server, and path guidance is carried out in the mobile information terminal alone.

## Claims

1. An information-providing system having an information distribution server for providing location-specifying information that corresponds to spot information, and a mobile terminal device for connecting to the information distribution server via transmission and reception means and displaying location-specifying information provided by the information distribution server, the information-providing system **characterized in** comprising:
a street information database populated with street information in which house numbers located at a boundary of individual map areas are associated with individual streets included in the map areas, each of which map areas being segmented into predetermined unit areas;
present location acquisition means for receiving a location-specifying signal and acquiring spot information that includes the present location;
area judgment means for judging the map area that corresponds to the present location among the map areas, on the basis of spot information acquired from the present location acquisition means;
street information acquisition means for acquiring from the street information database the street information included in the map area judged by the area judgment means;
street judgment means for judging the street nearest the present location on the basis of spot information and street information acquired by the street information acquisition means; and
house number judgment means for judging the house number of the current site as the location-specifying information on the basis of the spot information and the street information that corresponds to the nearest street, with reference to the house number information associated with the street information stored in the street information database.

2. The information-providing system according to claim 1, **characterized in that** the street judgment means compares the vertical distance dropped down from the present location acquired by the present location acquisition means with each street that corresponds to the street information acquired by the street information acquisition means, and judges the street having the shortest vertical distance to be the nearest street.

3. The information-providing system according to claim 1 or 2, **characterized in** further comprising path search means for searching for a path from a departure point to a destination on the basis of path search conditions, wherein
the guidance path searched by the path search means is displayed and the location-specifying information is displayed.

4. An information distribution server for providing to a mobile terminal device connected via transmission and receiving means location-specifying information that corresponds to spot information acquired by the mobile terminal device, the information distribution server comprising:
a street information database including street information in which house numbers located at a boundary of a map area are associated with individual streets included in the map area, each of which map areas being segmented into predetermined unit areas;
area judgment means for judging the map area that corresponds to the present location among the map areas on the basis of spot information acquired by the mobile terminal device;
street information acquisition means for acquiring from the street information database the street information included in the map area judged by the area judgment means;
street judgment means for judging the street nearest the present location on the basis of spot information and street information acquired by the street information acquisition means; and
house number judgment means for judging the house number of the current site as the location-specifying information on the basis of the spot information and the street information that corresponds to the nearest street with reference to the house number information associated with the street information stored in the street information database.

5. The information distribution server according to claim 4, **characterized in that** the street judgment means compares the vertical distance dropped down from the present location acquired by the mobile terminal device with each street that corresponds to the street information acquired by the street information acquisition means, and judges the street having the shortest vertical distance to be the nearest street.

6. The information distribution server according to claim 4 or 5, **characterized in** further comprising path search means for searching for a path from a departure point to a destination on the basis of path search conditions, wherein
the guidance path searched by the path search means is provided and the location-specifying information is provided.

7. An information-providing method in an information distribution server for providing, to a mobile terminal device connected via transmission and receiving means, location-specifying information that corresponds to spot information acquired by the mobile terminal device, the information-providing method comprising:
having a street information database populated with street information in which house numbers located at a boundary of individual map areas are associated with individual streets included in the map areas, each of which map areas being segmented into predetermined unit areas;
a first step for judging the map area that corresponds to the present location among the map areas, on the basis of spot information acquired by the mobile terminal device;
a second step for acquiring from the street information database the street information included in the map area judged in the first step;
a third step for judging the street nearest the present location on the basis of spot information and street information acquired in the second step; and
a fourth step for judging the house number of the current site as the location-specifying information on the basis of the spot information and the street information that corresponds to the nearest street, with reference to the house number information associated with the street information stored in the street information database.

8. The information-providing method according to claim 7, **characterized in** comprising the third step comparing the vertical distance dropped down from the present location acquired by the mobile terminal device with each of the streets that corresponds to the street information acquired in the second step, and judges the street having the shortest vertical distance to be the nearest street.
